(19) **Europäisches Patentamt / European Patent Office / Office européen des brevets**

(11) **EP 4 738 205 A1**

(12) **EUROPEAN PATENT APPLICATION**
published in accordance with Art. 153(4) EPC

(43) Date of publication:
**06.05.2026 Bulletin 2026/19**

(21) Application number: **23943745.2**

(22) Date of filing: **30.06.2023**

(51) International Patent Classification (IPC):
**G06N 10/00** $^{(2022.01)}$

(52) Cooperative Patent Classification (CPC):
**G06N 10/00**

(86) International application number:
**PCT/JP2023/024466**

(87) International publication number:
**WO 2025/004357 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **QunaSys Inc.**
**Bunkyo-ku**
**Tokyo 113-0001 (JP)**

(72) Inventors:
• **YANO, Hiroshi**
**Tokyo 113-0001 (JP)**

• **KOHDA, Masaya**
**Tokyo 113-0001 (JP)**
• **TSUTSUI, Shoichiro**
**Tokyo 113-0001 (JP)**
• **IMAI, Ryosuke**
**Tokyo 113-0001 (JP)**
• **KANNO, Keita**
**Tokyo 113-0001 (JP)**
• **NAKAGAWA, Yuya**
**Tokyo 113-0001 (JP)**

(74) Representative: **V.O.**
**P.O. Box 87930**
**2508 DH Den Haag (NL)**

(54) **QUANTUM INFORMATION PROCESSING METHOD, QUANTUM INFORMATION PROCESSING PROGRAM, CLASSIC COMPUTER, AND HYBRID SYSTEM**

(57)     A classical computer transmits a quantum circuit for preparing a quantum state to a quantum computer. A quantum computer, with respect to a first qubit group containing n individual qubits and a second qubit group containing n individual qubits different to the qubits in the first qubit group, sets n individual pairs of a qubit in the first qubit group and a qubit in the second qubit group, uses the n individual pairs and the quantum circuit to execute Bell measurement on a tensor product of quantum states so as to acquire a result of the Bell measurement, and transmits the Bell measurement result to the classical computer. The classical computer computes respective expectation values of plural Pauli products in a quantum state based on the Bell measurement results, and computes respective expectation values of a plurality of operators based on an arbitrary combinations of Pauli products from out of the plural Pauli products.

FIG.1

EP 4 738 205 A1

**Description**

Field

Technology disclosed herein relates to a quantum information processing method, a quantum information processing program, a classical computer, and a hybrid system.

Background Art

Executing a task of "measuring an expectation value of an operator" with good efficiency is important when executing some computation processing using a quantum computer. For example, when executing a quantum computation using a quantum computer, a ground state energy may be obtained by measuring an expectation value of a Hamiltonian operator for a ground state. Normally, when measuring an expectation value of a complicated operator such as a Hamiltonian operator using a comparatively shallow quantum circuit, there is a need to repeatedly execute plural types of quantum circuit.

Note that an operator may be represented by a linear sum of arbitrary Pauli products. Note that a Pauli product is an operator expressed by a direct product of a Pauli operator. A method for computing a value related to an arbitrary Pauli product using a quantum circuit having 2n individual qubits is known in Document 1 (Hsin-Yuan Huang, Richard Kueng, John Preskill, "Information-theoretic bounds on quantum advantage in machine learning", Phys. Rev. Lett. 126, 190505 (https://journals.aps.org/prl/abstract/10.1103/PhysRevLett.126.190505)) and Document 2 (Zhang Jiang, Amir Kalev, Wojciech Mruczkiewicz, Hartmut Neven, "Optimal fermion-to-qubit mapping via ternary trees with applications to reduced quantum states learning", Quantum 4, 276 (2020) (https://quantum-journal.org/papers/q-2020-06-04-276/)).

For example, Document 1 discloses technology for computing an absolute value of an expectation value of an arbitrary Pauli product using a quantum circuit having 2n individual qubits. Moreover, Document 2 discloses technology for computing an arbitrary Pauli product expectation value itself using a quantum circuit having 2n individual qubits.

Appropriate processing of Pauli product expectation values is needed to obtain an expectation value of an operator. However, such a method is not disclosed in Document 1 or Document 2.

SUMMARY OF INVENTION

Technical Problem

In consideration of the above circumstances, technology disclosed herein provides a quantum information processing program, a classical computer, and a hybrid system that are capable of efficiently obtaining an expectation value of an operator.

Solution to Problem

In order to achieve the above object, a quantum information processing method of the present disclosure is a quantum information processing method for execution by a classical computer in a hybrid system including the classical computer and a quantum computer. In the quantum information processing method, the classical computer transmits a quantum circuit for preparing a quantum state to the quantum computer. The quantum computer, with respect to a first qubit group containing n individual qubits and a second qubit group containing n individual qubits different to the qubits in the first qubit group, sets n individual pairs of a qubit in the first qubit group and a qubit in the second qubit group, uses the n individual pairs and the quantum circuit to execute Bell measurement on a tensor product of quantum states so as to acquire a result of the Bell measurement, and transmits the Bell measurement result to the classical computer. The classical computer computes respective expectation values of plural Pauli products in a quantum state based on the Bell measurement results, and computes respective expectation values of plural operators based on an arbitrary combinations of Pauli products from out of the plural Pauli products.

Advantageous Effects

Technology disclosed herein exhibits the advantageous effect of enabling an expectation value of an operator to be obtained efficiently.

BRIEF DESCRIPTION OF DRAWINGS

Fig. 1 is a diagram illustrating an example of a schematic configuration of a hybrid system 100 of the present exemplary embodiment.

Fig. 2 is a schematic block diagram of a computer functioning as a classical computer 110, a control device 121, and a user terminal 130.

Fig. 3 is a diagram to explain Bell measurement.

Fig. 4 is a diagram illustrating an example of a sequence of executions by a hybrid system 100 of an exemplary embodiment.

Fig. 5 is a diagram illustrating an example of a sequence of executions by a hybrid system 100 of an exemplary embodiment.

DESCRIPTION OF EMBODIMENTS

Detailed explanation follows regarding exemplary embodiments of technology disclosed herein, with reference to the drawings.

Hybrid System 100 According to First Exemplary Embodiment

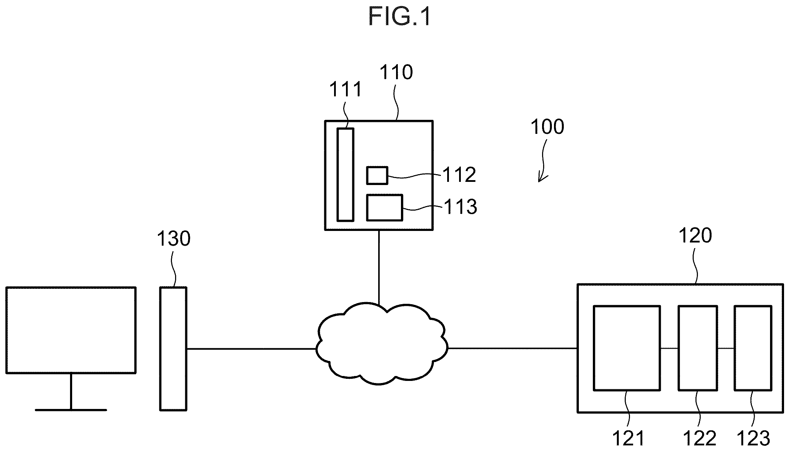

Fig. 1 illustrates a hybrid system 100 according to a first exemplary embodiment. The hybrid system 100 of the present exemplary embodiment includes a classical computer 110 serving as an example of an information processing device, a quantum computer 120, and a user terminal 130. As illustrated in Fig. 1, the classical computer 110, the quantum computer 120, and the user terminal 130 are connected together, for example, over a computer network such as an IP network.

In the hybrid system 100 of the present exemplary embodiment, the quantum computer 120 performs specific quantum computations in response to requests from the classical computer 110, and then outputs the computation results of such quantum computations to the classical computer 110. The classical computer 110 then outputs computation results corresponding to the quantum computations to the user terminal 130. Specific computation processing is accordingly executed by the hybrid system 100 as a whole.

The classical computer 110 includes a communication section 111 such as a communication interface, a processing section 112 such as a processor, a central processing unit (CPU), or the like, and an information storage section 113 including a storage device such as memory or a hard disk, or a storage medium, and the classical computer 110 is configured to perform various processing by executing a program. The classical computer 110 may include a server configured by one or plural devices. The program may be one program, or may include plural programs, and may be configured as a non-transitory program product recorded on a computer-readable storage medium.

As an example, based on information transmitted from the classical computer 110, the quantum computer 120 generates an electromagnetic wave for irradiating onto at least one qubit out of a qubit group 123. The quantum computer 120 then executes the quantum circuit by irradiating the generated electromagnetic wave onto the at least one qubit out of the qubit group 123.

In the example of Fig. 1, the quantum computer 120 includes a control device 121 to perform communication with the classical computer 110, an electromagnetic wave generation device 122 to generate an electromagnetic wave in response to requests from the control device 121, and the qubit group 123 subjected to irradiation of an electromagnetic wave from the electromagnetic wave generation device 122. The electromagnetic wave generation device 122 and the qubit group 123 of the quantum computer 120 also configure a quantum processing unit (QPU). Note that in the present exemplary embodiment, "quantum computer" does not mean a computer that does not perform any computation using classical bits at all, and instead refers to a computer including at least some computation with qubits, or a computer that imitates the behavior of a quantum computer. A computer that imitates the behavior of a quantum computer is, for example, a classical computer executing a quantum simulation.

The control device 121 is a classical computer that performs computation using classical bits, and performs some or all of the processing that is described in the present specification as being performed by the classical computer 110, on behalf thereof.

The user terminal 130 is a classical computer that performs computation using classical bits. The user terminal 130 receives information input by a user, and executes processing in response to this information.

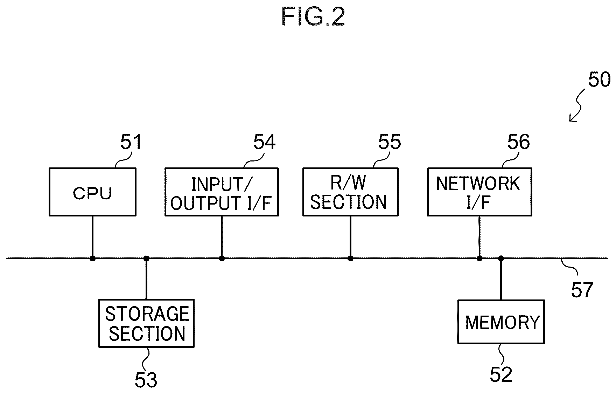

The classical computer 110, the control device 121, and the user terminal 130 may, for example, be implemented by a computer 50, illustrated in Fig. 2. The computer 50 includes a central processing unit (CPU) 51, memory 52 serving as a temporarily storage space, and a non-volatile storage section 53. The computer 50 further includes an input/output interface (I/F) 54 connected to an external device, an output device, or the like, and a read/write (R/W) section 55 that controls the reading and writing of data to a recording medium. The computer 50 further includes a network I/F 56 for connection to a network such as the internet. The CPU 51, the memory 52, the storage section 53, the input/output I/F 54, the R/W section 55, and the network I/F 56 are connected together through a bus 57.

Present Exemplary Embodiment: Outline

Measuring an expectation value of an operator efficiently is important when executing some computation processing using a quantum computer. However, plural types of quantum circuit need to be used to measure operator expectation values.

Note that, as illustrated in following Equation (1), each of the operators $O_i$ is computably using Equation (1) below based on coefficients $c_k^{(i)}$ and Pauli products $P_k^{(i)}$. Note that i is an index to identify an operator, and k is an index to identify a Pauli product.

$$O_i = \sum_k c_k^{(i)} P_k^{(i)}$$

Equation (1)

This means that the expectation value of the operator $O_i$ is also computable as long as the expectation values of the Pauli products $P_k^{(i)}$ can be obtained.

The hybrid system 100 of the present exemplary embodiment accordingly acquires the expectation values of plural Pauli products by executing Bell measurement on two quantum states. The hybrid system 100 of the present exemplary embodiment then computes the expectation value of the target operator by selecting an arbitrary Pauli product needed to compute the expectation value of the operator from these plural Pauli product expectation values.

Note that the square of an expectation value of the Pauli product can be obtained by performing Bell measurement on two quantum states that are the same as each other. In such cases, because it is not the Pauli product expectation value itself that is obtained, there is a need to separately acquire the sign of the Pauli product expectation value, and to then compute the Pauli product expectation value itself based on this sign and the square root of the square of the Pauli product expectation value.

The hybrid system 100 of the first exemplary embodiment accordingly computes the square of the Pauli product expectation value based on results of Bell measurement by the quantum computer 120, and also acquires the sign of the Pauli product expectation value. The hybrid system 100 of the first exemplary embodiment computes the Pauli product expectation value based on the acquired sign and the square root of the square of the Pauli product expectation value. The hybrid system 100 of the first exemplary embodiment then computes the expectation value of the operator $O_i$ according to Equation (1) based on the computed Pauli product expectation value $P_k^{(i)}$ and on pre-obtained coefficients $c_k^{(i)}$. Specific description thereof follows. Note that a tensor product is denoted by ($\times$) below.

Quantum state $\rho$ is considered below. The quantum state $\rho$ of the present exemplary embodiment represents two types of quantum state called mixed states and pure states. The quantum state $\rho$ can be expressed as in the following Equation when the quantum state $\rho$ is a pure state. In such cases, pure state $| \psi >$ is utilized to denote the quantum state $\rho$. Note that $\psi$ expresses a quantum state in the following.

$$\rho = | \psi > < \psi |$$

Moreover, in the present exemplary embodiment, the expectation value of the operator O in the quantum state $\rho$ is expressed by Tr (pO). Tr ($\cdot$) represents a trace of a matrix, and generally the expectation value of the operator O in the quantum state $\rho$ can be denoted by Tr (pO). The expectation value of the operator O in the quantum state $\rho$ is accordingly denoted by Tr (pO) in the present exemplary embodiment.

The following equation is established when the quantum state $\rho$ is denoted as in the above Equation.

$$\text{Tr} (\rho O) = < \psi \,|\, O \,|\, \psi >$$

Bell Measurement

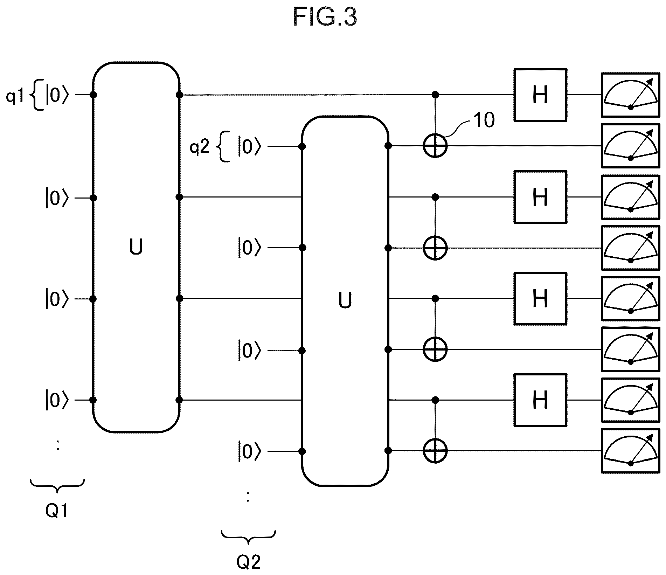

Fig. 3 is an explanatory diagram of Bell measurement. Fig. 3 illustrates a quantum circuit U for preparing quantum state p, a first qubit group Q1, a second qubit group Q2, a Hadamard gate H, and a CNOT gate 10. Although four qubits are illustrated in the example of Fig. 3, the qubit number is extendable to n individual qubits.

As illustrated in Fig. 3, in Bell measurement, with respect to the first qubit group Q1 containing n individual qubits and the second qubit group Q2 containing a different n individual qubits to the qubits in the first qubit group Q1, n individual pairs of a qubit in the first qubit group Q1 and a qubit in the second qubit group Q2 are set.

Then, as illustrated in Fig. 3, each of the n individual qubit pairs is utilized to acquire a result of Bell measurement by executing Bell measurement on tensor products of the quantum state ρ. When doing so, as illustrated in Fig. 3, a result of Bell measurement of tensor product ρ (×) ρ between quantum state ρ and quantum state ρ is obtained between qubit q1 and qubit q2. Bell measurement is a projection measure in the Bell basis, and the following Bell basis | $\Phi_1^\pm$ >, | $\Phi_2^\pm$> is obtained as a Bell measurement result. Note that in the following Equation, | 0 >$_\rho$ expresses that this qubit belongs to quantum state ρ.

$$|\Phi_1^\pm\rangle = \frac{1}{\sqrt{2}}\left(|0\rangle_\rho \otimes |0\rangle_\rho \pm |1\rangle_\rho \otimes |1\rangle_\rho\right)$$

$$|\Phi_2^\pm\rangle = \frac{1}{\sqrt{2}}\left(|0\rangle_\rho \otimes |1\rangle_\rho \pm |1\rangle_\rho \otimes |0\rangle_\rho\right)$$

Equation (2)

The above Bell basis | $\Phi_1^\pm$ >, | $\Phi_2^\pm$> corresponds to a simultaneous eigenstate of Pauli products Xp (×) Xp, Yp (×) Yp, Zp (×) Zp of Pauli operators X, Y, Z. This means that, by executing Bell measurement on all of the n individual qubit pairs, and by furthermore repeating measurement $N_{shot}$ times, squares | < Tr (pO) > |$^2$ of all kinds of Pauli product expectation values are obtained. The expectation values of all kinds of operators can be computed by combining the square root of the square | < Tr (pO) > |$^2$ of an arbitrary Pauli product expectation value with the sign thereof.

First Exemplary Embodiment Hybrid System 100: Operation

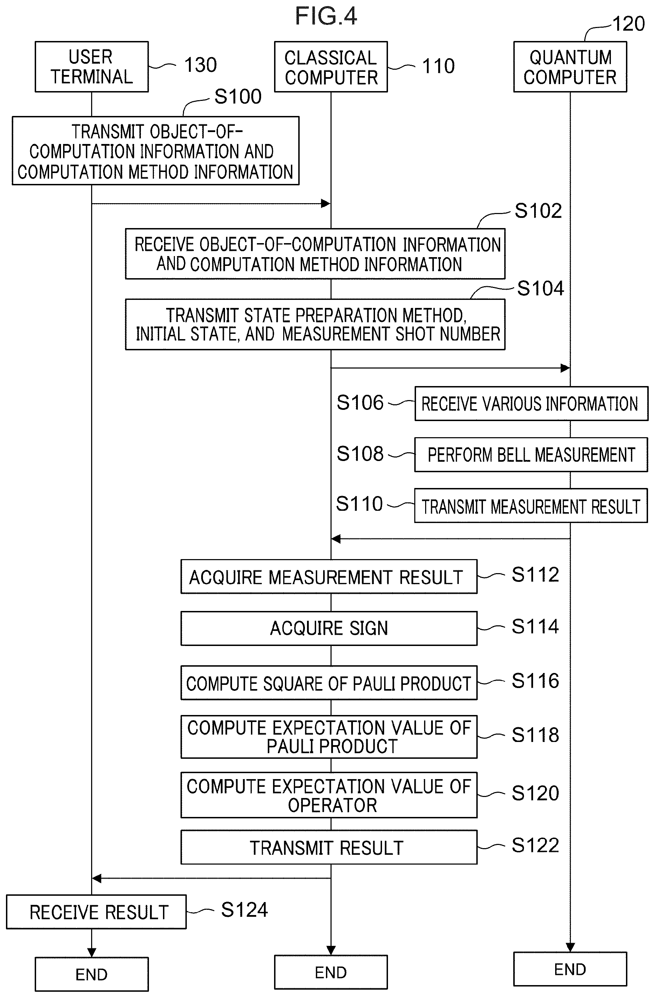

Explanation follows regarding specific operation of the hybrid system 100 of a first exemplary embodiment. The respective devices configuring the hybrid system 100 execute the various processing illustrated in Fig. 4.

First, at step S100, the user terminal 130 transmits, to the classical computer 110, object-of-computation information that is information relating to an object-of-computation input by a user and computation method information that is information related to the computation method.

Object-of-computation information includes, for example, information related to a set {O$_i$} of computation target operators and information related to the sign of a Pauli product expectation value. Computation method information includes, for example, information related to a state preparation method to prepare the quantum state p, information related to an initial state of the quantum state p, a measurement shot number $N_{shot}$, etc. Note that the state preparation method for preparing the quantum state p includes, for example, information related to a quantum circuit U for preparing the quantum state p, etc. For example, when the quantum state ρ is a pure state ρ = | ψ > < ψ |, the quantum circuit U is a quantum circuit with a quantum state | ψ > settable by operation on an initial state | i > of the quantum computer 120. Namely, U | i > = | ψ >.

Next, at step S102, the classical computer 110 receives the object-of-computation information and computation method information transmitted from the user terminal 130.

At step S104, the classical computer 110 transmits various information needed for quantum computation to the quantum computer 120. Specifically, the classical computer 110 transmits, to the quantum computer 120, information related to the state preparation method for preparing the quantum state p, information related to the initial state of the quantum state p, measurement shot number $N_{shot}$, etc. contained in the computation method information.

At step S106, the control device 121 of the quantum computer 120 receives the various information transmitted from the classical computer 110 at step S104.

At step S108, the control device 121 executes quantum computation in the quantum computer 120 according to the various information received at step S106. Specifically, as illustrated in Fig. 3, with respect to the first qubit group Q1 containing n individual qubits and the second qubit group Q2 containing a different n individual qubits to the qubits in the first qubit group Q1, the control device 121 of the quantum computer 120 sets n individual pairs of a qubit in the first qubit group Q1 and a qubit in the second qubit group Q2. Then, the control device 121 outputs to the quantum computer 120 a control signal so as to execute Bell measurement on the tensor product ρ (×) ρ of the quantum state ρ by employing the respective n individual pairs and the quantum circuit received at step S108.

In response to the control from the control device 121, the quantum computer 120 executes Bell measurement $N_{shot}$ times based on the quantum circuit received at step S108, and thereby acquires the measurement results thereof. Bell measurement is sampling on the tensor product ρ (×) ρ of the quantum state p, and sampling refers to repeated projection measurement of the tensor product ρ (×) ρ of the quantum state ρ in the Bell basis. The control device 121 of the quantum computer 120 thereby acquires the Bell basis $|\Phi_1^{\pm}>$, $|\Phi_2^{\pm}>$ that is the Bell measurement result an observed number of times.

Specifically, under control by the control device 121, the quantum computer 120 generates an electromagnetic wave for irradiating onto at least one qubit out of the qubit group 123. The quantum computer 120 then irradiates the at least one qubit out of the qubit group 123 with the generated electromagnetic wave so as to execute a quantum circuit for generating the tensor product $\rho \otimes \rho$ of the quantum state $\rho$. Gate operations of quantum gates in the quantum circuit are converted into corresponding electromagnetic waveforms, and the generated electromagnetic wave is irradiated onto the qubit group 123 by the electromagnetic wave generation device 122. The quantum computer 120 then outputs the measurement results obtained by this measurement. Note that although in the present exemplary embodiment a description has been given of an example of a case in which a quantum circuit is executed by irradiation of an electromagnetic wave, there is no limitation thereto, and a quantum circuit may be executed by a different method.

At step S110, the control device 121 transmits the observation number of times of the Bell basis $|\varphi_1^{\pm}>$, $|\varphi_2^{\pm}>$ that is the Bell measurement result obtained at step S108 to the classical computer 110.

At step S112, the classical computer 110 receives the Bell measurement results transmitted from the control device 121 at step S110.

At step S114, the classical computer 110 acquires signs $S_k^{(i)}$ of the respective expectation values of plural Pauli products $P_k^{(i)}$. Note that various methods may be considered as methods for acquiring the sign of the respective expectation values of the plural Pauli products $P_k^{(i)}$.

For example, the classical computer 110 may acquire the sign of the expectation value by causing the quantum computer 120 to execute approximate computation of the respective expectation values $\mathrm{Tr}(\rho P_k^{(i)})$ of the plural Pauli products $P_k^{(i)}$. Often low computation accuracy of the respective expectation values $\mathrm{Tr}(\rho P_k^{(i)})$ of the plural Pauli products $P_k^{(i)}$ is not a problem when only acquiring the sign of the respective expectation values of the plural Pauli products $P_k^{(i)}$. This means that, for example, the classical computer 110 adopts a known computation method capable of comparatively fast computation, and acquires the expectation value signs $S_k^{(i)}$ by causing the quantum computer 120 to execute approximate computation of the expectation values $\mathrm{Tr}(\rho P_k^{(i)})$ of the plural Pauli products $P_k^{(i)}$.

Moreover, for example, the classical computer 110 acquires the signs of the respective expectation values of the plural Pauli products $P_k^{(i)}$ by computing the expectation values $\mathrm{Tr}(\rho' P_k^{(i)})$ related to a state p' approximating to the quantum state $\rho$. As described above, often low computation accuracy of the respective expectation values $\mathrm{Tr}(\rho P_k^{(i)})$ of the plural Pauli products $P_k^{(i)}$ is not a problem when only acquiring signs of the respective expectation values of the plural Pauli products $P_k^{(i)}$. The classical computer 110 accordingly employs a known computation method capable of comparatively fast computation to acquire the respective signs $S_k^{(i)}$ of the expectation values of the plural Pauli products $P_k^{(i)}$ by computation of the expectation values $\mathrm{Tr}(\rho P_k^{(i)})$ related to the state p' approximated to the quantum state $\rho$.

Moreover, for example, the classical computer 110 may be configured so as to predetermined the signs $S_k^{(i)}$ of respective expectation values of the plural Pauli products $P_k^{(i)}$ using another known method.

At step S116, the classical computer 110 computes the squares $(\mathrm{Tr}(\rho P_k^{(i)}))^2$ of the respective expectation values of the plural Pauli products $P_k^{(i)}$ in the quantum state $\rho$ according to a known method based on the number of times of observation of $|\varphi 1^{\pm}>$ and $|\varphi 2^{\pm}>$ in the Bell measurement results received at step S112.

Next, at step S118, the classical computer 110 computes the absolute values $|\mathrm{Tr}(\rho P_k^{(i)})|$ of the respective expectation values of the plural Pauli products $P_k^{(i)}$ by computing the square roots of the squares $(\mathrm{Tr}(\rho P_k^{(i)}))^2$ of the respective expectation values of the plural Pauli products $P_k^{(i)}$ as computed at step S116.

Note that there is sometimes an error contained in the measurements by the quantum computer 120, and sometimes the square of the expectation values is computed as being a negative value.

The classical computer 110 of the present exemplary embodiment accordingly computes absolute values $|\mathrm{Tr}(\rho P_k^{(i)})|$ of the respective expectation values of the plural Pauli products $P_k^{(i)}$ according to the following Equation. Note that the square $(\mathrm{Tr}(\rho P_k^{(i)}))^2$ of the expectation value is represented by v in the following Equation.

$$\left| \mathrm{Tr}(\rho P_k^{(i)}) \right| = \sqrt{\max(0, v)}$$

Then, at step S118, the classical computer 110 computes the respective expectation values $\mathrm{Tr}(\rho P_k^{(i)})$ of the plural Pauli products $P_k^{(i)}$ according to the following Equation based on the signs $S_k^{(i)}$ of the plural Pauli products $P_k^{(i)}$ obtained at step S114 and based on the absolute values $|\mathrm{Tr}(\rho P_k^{(i)})|$ of the respective expectation values of the plural Pauli products $P_k^{(i)}$ obtained at step S116.

$$\mathrm{Tr}(\rho P_k^{(i)}) = s_k^{(i)} \times \left| \mathrm{Tr}(\rho P_k^{(i)}) \right|$$

Then, at step S120, the classical computer 110 computes the respective expectation values < $O_i$ > of plural operators $O_i$ contained in the set {$O_i$} of a computation target operator obtained at step S102. Specifically, the classical computer 110 computes respective expectation values < $O_i$ > of plural operators $O_i$ based on arbitrary combinations of Pauli products from out of the respective expectation values Tr ($\rho P_k^{(i)}$) of the plural Pauli products obtained at step S118.

Note that expectation values of all kinds of Pauli products are computed by the computation processing of the step S118. This means that at step S120, the classical computer 110 selects Pauli product expectation values needed when computing plural operators $O_i$ from out of the respective expectation values of the plural Pauli products computed at step S118, and computes the respective expectation values < $O_i$ > of plural operators $O_i$ according to the following Equation based on the selected Pauli product expectation values. Note that the respective plural Pauli coefficients $P_k^{(i)}$ are determined in advance by a known method.

$$\langle O_i \rangle = \mathrm{Tr}(\rho O_i) = \sum_k c_k^{(i)} \mathrm{Tr}(\rho P_k^{(i)})$$

At step S122, the classical computer 110 transmits computation results of the respective expectation values < Oi > of plural operators $O_i$ obtained at step S120 to the user terminal 130.

At step S124, the user terminal 130 receives results transmitted from the classical computer 110.

As described above, the classical computer in the hybrid system of the first exemplary embodiment transmits the quantum circuit for preparing a quantum state to the quantum computer. Next, with respect to the first qubit group containing n individual qubits and the second qubit group containing a different n individual qubits to the qubits in the first qubit group, the quantum computer sets n individual pairs of a qubit in the first qubit group and a qubit in the second qubit group. Next, the quantum computer acquires Bell measurement results by executing Bell measurement on tensor products of quantum state using the n individual pairs and the quantum circuit, and transmits the Bell measurement results to the classical computer. Next, the classical computer computes respective expectation values of plural Pauli products in a quantum state based on the Bell measurement results. The classical computer then computes respective expectation values of plural operators based on a n arbitrary combinations of Pauli products from out of the plural Pauli products. This thereby enables expectation values of operators to be obtained efficiently.

More specifically, the classical computer in the hybrid system of the first exemplary embodiment computes squares (Tr ($\rho P_k^{(i)}$))² of respective expectation values of plural Pauli products $P_k^{(i)}$ in the quantum state $\rho$ based on a number of times of observation of the | $\varphi_1^{\pm}$ > and | $\varphi_2^{\pm}$ > in the Bell measurement results. Next, the classical computer computes absolute values | Tr ($\rho P_k^{(i)}$) | of the respective expectation values of the plural Pauli products $P_k^{(i)}$ by computing the square roots of the expectation value squares (Tr ($\rho P_k^{(i)}$)². Next, the classical computer computes the respective expectation values Tr ($\rho P_k^{(i)}$) of the plural Pauli products $P_k^{(i)}$ based on the sign of the expectation value predetermined for each of the plural Pauli products $P_k^{(i)}$ and based on the respective expectation value absolute values |Tr ($\rho P_k^{(i)}$)| of the plural Pauli products $P_k^{(i)}$. The classical computer computes respective expectation values of the plural operators $O_i$ based on the plural predetermined coefficients $c_k^{(i)}$ and on the respective expectation values Tr ($\rho P_k^{(i)}$) of the plural Pauli products $P_k^{(i)}$. This thereby enables an expectation value of an operator to be obtained efficiently.

Even if quantum computing is executed using a currently implementable quantum computer, due to the occurrence of noise in the computation processes thereof, errors may arise in the computation results. In cases in which an attempt is made to directly and accurately execute computation of an expectation value of an operator using such a quantum computer, there is a need to execute, on a quantum computer, a quantum circuit having a size too big to be executable. In contrast thereto, an expectation value of an operator can be efficiently and accurately obtained by computing only values needed to compute Pauli product expectation values on a quantum computer, while executing Pauli product expectation value and operator expectation value computation on a classical computer.

Thus the classical computer of the present exemplary embodiment computes in advance all kinds of Pauli products expectation values based on Bell measurement result obtained from a quantum computer, and arbitrary selects a Pauli product expectation value needed for computation of an operator expectation value from out of these Pauli product expectation values. Then the classical computer computes the expectation value of a computation target operator based on the arbitrary Pauli product expectation value. Note that together with this, the classical computer also acquires the sign of the Pauli product expectation values when computing the Pauli product expectation values. This thereby enables an expectation value of an operator to be obtained both efficiently and with good accuracy. Moreover, measurement results obtained by a quantum computer are saved on a classical computer, enabling an expectation value of a different operator subsequently desired for computation to be easily computed without using a quantum computer again.

Note that, for example, the hybrid system 100 of the first exemplary embodiment is able to execute computation processing such as the following when computing an expectation value of a Hamiltonian operator H using a variational quantum eigensolver (VQE). In such cases the quantum state $\rho$ is a parameter $\theta$ appended quantum state $\rho(\theta)$. Note that parameter $\theta$ is an expression used to collectively represent plural parameters.

When the hybrid system 100 is computing an expectation value of a Hamiltonian operator H using a VQE, a parameter $\theta^*$ is searched for by the classical computer 110 and the quantum computer 120 so as to minimize $\mathrm{Tr}(\rho(\theta)H)$ that is the expectation value of the Hamiltonian operator H. In such cases, $\rho(\theta^*)$ is computed as a ground state, and $\mathrm{Tr}(\rho(\theta^*)H)$ is computed as a ground state energy.

When doing so, the classical computer 110 computes respective expectation values $\mathrm{Tr}(\rho P_k^{(i)})$ of plural Pauli products $P_k^{(i)}$ by, in repeated computations of the VQE, reusing the sign of the expectation value obtained at a previous step as the sign of the expectation value for the next step onwards in a specific period. The cost of sign estimation can be reduced by the sign being updated at a fixed frequency rather than being updated every time while searching for parameter $\theta^*$.

The Hamiltonian operator H is expressed by the following equation. Note that $c_k$ represents a coefficient, and $P_k$ represents a Pauli product.

$$H = \sum_k c_k P_k$$

When the parameter $\theta$ has been obtained, and the sign of the expectation value $<P_k>$ of the Pauli products $P_k$ is $s_k$. Note that the sign $s_k$ is predetermined by a method such as described above.

Consider a parameter $\theta_{1,+}$ resulting from a parameter $\theta$ being shifted by a specific amount during searching for parameter $\theta^*$ using VQE. For example, assume a case in which $\theta = (\theta_1, \theta_2, \cdots, \theta_1)$, and $\theta_{1,+} = (\theta_1 + \pi/2, \theta_2, ..., \theta_1)$. The parameter $\theta$ is successively changed during searching for the optimum parameter $\theta^*$ using VQE. The expectation value $<P_k>$ of the Pauli products $P_k$ is computed for each change in the parameter $\theta$, and the sign $s_k$ thereof is also computed, and so the classical computer 110 stores the sign $s_k^p$ computed therein in a storage section. Note that p is a label representing the post-change parameter $\theta_{1,+}$. For example, in cases in which the parameter is $\theta_{1,+}$, the sign in this case is denoted by sign $s_k^{1,+}$.

When searching for an optimum parameter $\theta^*$ using VQE, energy is minimized while gradually changing parameter $\theta$ according to an optimization algorithm thereof. However, the computation cost increases because the sign $s_k$ of the expectation value $<P_k>$ of the Pauli products $P_k$ is also updated for each change in the parameter $\theta$. However, the sign $s_k^p$ can be assumed to be constant while changes to the parameter $\theta$ are small.

The classical computer 110 accordingly, for example, sets a step number Ts for updating the sign, and updates the sign with a specific method only when the number of steps is a multiple of Ts. The computation cost for estimating the sign is accordingly reduced.

Hybrid System 100 According to Second Exemplary Embodiment

Next, description follows regarding a hybrid system accordingly to a second exemplary embodiment. Note that configuration of the hybrid system 100 of the second exemplary embodiment is similar to that of the first exemplary embodiment, and so the same reference numerals will be appended thereto and description omitted thereof.

The second exemplary embodiment differs from the first exemplary embodiment in the point that Pauli product expectation values are estimated without estimating the sign of the Pauli product expectation values.

Specifically, the classical computer 110 of the second exemplary embodiment computes values $(\mathrm{Tr}(\rho P_k^{(i)}))(\mathrm{Tr}(\sigma P_k^{(i)}))$ related to respective expectation values of plural Pauli products $P_k^{(i)}$ based on a number of times of observation of $|\varphi_1^\pm>$ and $|\varphi_2^\pm>$ from out of Bell measurement results for the tensor product $\rho(\times)\sigma$ of quantum state $\rho$ and quantum state $\sigma$. Moreover, the classical computer 110 of the second exemplary embodiment computes the expectation values $\mathrm{Tr}(\sigma P_k^{(i)})$ of the Pauli products $P_k^{(i)}$ in the quantum state $\sigma$. The classical computer 110 of the second exemplary embodiment then computes the respective expectation values $(\mathrm{Tr}(\rho P_k^{(i)})$ of the plural Pauli products $P_k^{(i)}$ by dividing the values $(\mathrm{Tr}(\rho P_k^{(i)}))(\mathrm{Tr}(\sigma P_k^{(i)}))$ related to the respective expectation values of the plural Pauli products $P_k^{(i)}$ by the expectation value $\mathrm{Tr}(\sigma P_k^{(i)})$ of the Pauli product $P_k^{(i)}$ in the quantum state $\sigma$. This thereby enables computation of the respective expectation values of plural operators $O_i$ even without acquiring the sign of the Pauli product expectation value. Specific description follows. Note that in the following the quantum state $\sigma$ is also referred to as auxiliary state $\sigma$.

In the second exemplary embodiment, a number of times of observation are obtained of the following Bell basis $|\varphi_1^\pm>$, $|\varphi_2^\pm>$ as the Bell measurement result.

$$|\Phi_1^{\pm}\rangle = \tfrac{1}{\sqrt{2}}\left(|0\rangle_\rho \otimes |0\rangle_\sigma \pm |1\rangle_\rho \otimes |1\rangle_\sigma\right)$$

$$|\Phi_2^{\pm}\rangle = \tfrac{1}{\sqrt{2}}\left(|0\rangle_\rho \otimes |1\rangle_\sigma \pm |1\rangle_\rho \otimes |0\rangle_\sigma\right)$$

Equation (3)

The above Bell basis $|\varphi_1^{\pm}\rangle$, $|\varphi_2^{\pm}\rangle$ corresponds to simultaneous eigenstates of the Pauli products $X_\rho (\times) X\sigma$, $Y_\rho (\times) Y\sigma$, $Z_\rho (\times) Z\sigma$ of the Pauli operators X, Y, Z. This means that values $(\mathrm{Tr}\,(\rho P_k^{(i)}))\,(\mathrm{Tr}\,(\sigma P_k^{(i)}))$ related to all kinds of Pauli products expectation values are obtained by executing Bell measurement on all of the n individual qubit pairs, and furthermore repeating such measurement $N_{shot}$ number of times.

The classical computer 110 of the second exemplary embodiment separately computes the Pauli product expectation values $(\mathrm{Tr}\,(\sigma P_k^{(i)}))$ in the auxiliary state $\sigma$. The classical computer 110 of the second exemplary embodiment then computes the values $(\mathrm{Tr}\,(\rho P_k^{(i)})$ related to the Pauli product expectation value in the quantum state p by dividing the values $(\mathrm{Tr}\,(\rho P_k^{(i)}))\,(\mathrm{Tr}\,(\sigma P_k^{(i)}))$ related to the Pauli product expectation value by the Pauli product expectation value $(\mathrm{Tr}\,(\sigma P_k^{(i)}))$ in the auxiliary state $\sigma$. Because expectation values of all kinds of Pauli products can be obtained thereby, expectation values of all kinds of operator can be computed by combining arbitrary Pauli product expectation values from out of these.

Second Exemplary Embodiment Hybrid System 100: Operation

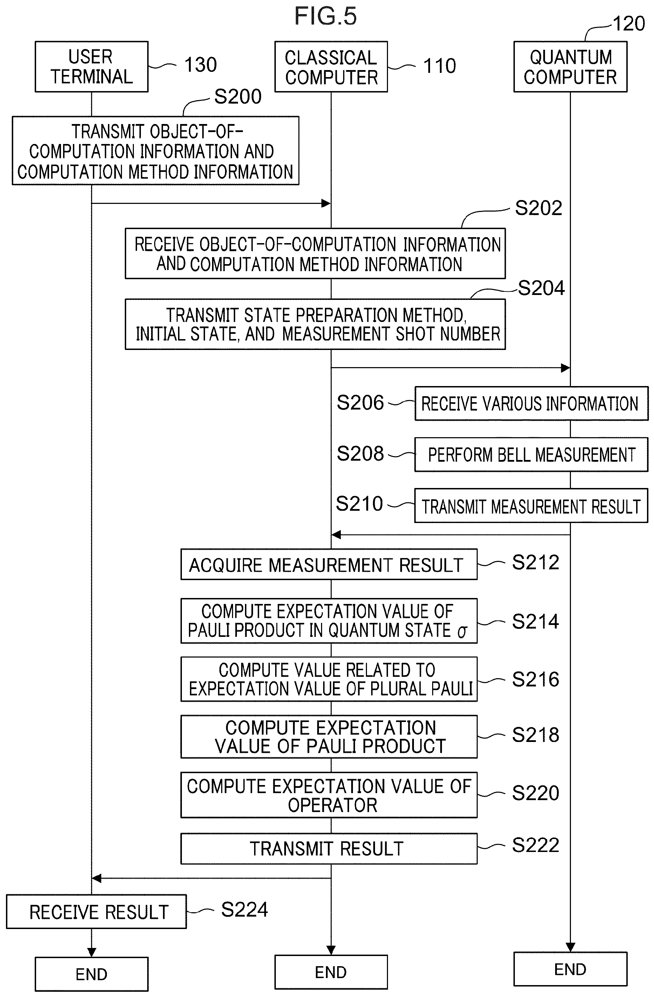

Description follows regarding a specific operation of the hybrid system 100 of the second exemplary embodiment. Each processing illustrated in Fig. 5 is executed in the respective devices of the hybrid system 100.

First, at step S200, the user terminal 130 transmits, to the classical computer 110, the object-of-computation information that is information related to the computation target input by a user, and the computation method information that is information related to the computation method.

The computation method information of the second exemplary embodiment, in addition to the computation method information of the first exemplary embodiment, further contains information related to a state preparation method for preparing an auxiliary state $\sigma$ and information related to an initial state of the auxiliary state $\sigma$.

Note that in relation to the auxiliary state $\sigma$, the expectation value $\mathrm{Tr}\,(\sigma P)$ for an arbitrary Pauli product P should be computed efficiently by the classical computer 110. Moreover, expectation values of all of the Pauli product contained in the computation target operator O should be non-zero. For example, the following conditions are satisfied for $\sigma = |\varphi\rangle\langle\varphi|$, and $|\varphi\rangle = |\varphi_1\rangle (\times) \cdots |\varphi_1\rangle$ (wherein, $|\varphi_1\rangle$ is a quantum state of one qubit, and is configured so as not to be the eigenstate of Pauli operators X, Y, Z). More generally, this can be expressed as $\sigma = |\varphi\rangle\langle\varphi|$, and $|\varphi\rangle = |\varphi1\_k1\rangle (\times) |\varphi2\_k2\rangle \cdots |\varphi m\_km\rangle$. In such cases, auxiliary state $\sigma$ is a product state of a quantum state of qubit numbers k1, k2, ..., km. Herein, state $|\varphi1\_ki\rangle$ (i = 1, ..., m) is a quantum state of ki qubits. Wherein, $k1 + k2 + \cdots + km = n$. For example, k1, $\cdots$ km may be pre-set by a user. n is a total number of qubits employed for computation of auxiliary state $\sigma$. As long as k1, $\cdots$ km is sufficiently small, the expectation value of an arbitrary Pauli product can be computed efficiently by a classical computer.

Next, at step S202, the classical computer 110 receives the object-of-computation information and the computation method information transmitted from the user terminal 130.

At step S204, the classical computer 110 transmits various information needed for quantum computation to the quantum computer 120. Specifically, the classical computer 110 transmits, to the quantum computer 120, information contained in the computation method information of information related to the state preparation method for preparing the quantum state p, information related to the initial state of the quantum state $\rho$, information related to the state preparation method for preparing the auxiliary state $\sigma$, information related to the initial state of the auxiliary state $\sigma$, measurement shot number $N_{shot}$, etc.

Note that although a case is described in which, at step S204, the classical computer 110 transmits, to the quantum computer 120, information related to the state preparation method for preparing the auxiliary state $\sigma$, and the quantum computer 120 determines the auxiliary state $\sigma$ according to the information related to the state preparation method for preparing the auxiliary state $\sigma$, the classical computer 110 may be configured so as to determine the auxiliary state $\sigma$ by computation processing. For example, when the classical computer 110 computes the $(\mathrm{Tr}\,(\rho P_k^{(i)})$ by executing optimization computation so as to minimize an objective function expressing variation in computation results of the expectation values $(\mathrm{Tr}\,(\rho P_k^{(i)})$, a configuration may be adopted in which an optimum auxiliary state $\sigma$ is pre-determined such that the variation in these computation results is small, and information about the auxiliary state $\sigma$ is transmitted to the quantum computer 120. The quantum computer 120 executes the computation processing described later using the auxiliary state $\sigma$ determined by the classical computer 110.

At step S206, the control device 121 of the quantum computer 120 receives various information transmitted from the classical computer 110 at step S204.

At step S208, the control device 121 causes quantum computation to be executed by the quantum computer 120 according to the various information received at step S206. Specifically, as illustrated in Fig. 3, with respect to the first qubit group Q1 containing n individual qubits and the second qubit group Q2 containing a different n individual qubits to the qubits in the first qubit group Q1, the control device 121 of the quantum computer 120 sets n individual pairs of a qubit in the first qubit group Q1 and a qubit in the second qubit group Q2. Then, the control device 121 outputs a control signal to the quantum computer 120 so as to execute Bell measurement on the tensor product $\rho \otimes \sigma$ of the auxiliary state $\sigma$ and the quantum state $\rho$ employing the n individual pairs and the quantum circuit received at step S108.

In response to the control by the control device 121, the quantum computer 120 executes Bell measurement $N_{shot}$ times based on the quantum circuit received at step S208, and accordingly acquires the measurement results thereof. Bell measurement is sampling on the tensor product $\rho \otimes \sigma$ of the quantum state p, and sampling refers to repeated projection measurement of the tensor product $\rho \otimes \sigma$ of the quantum state $\rho$ in the Bell basis. The control device 121 of the quantum computer 120 thereby acquires the observation number of times of the Bell basis $| \varphi_1^\pm >$, $| \varphi_2^\pm >$ that is the Bell measurement results.

At step S210, the control device 121 transmits the observation number of times of the Bell basis $| \varphi_1^\pm >$, $| \varphi_2^\pm >$ that is the Bell measurement results obtained at step S208 to the classical computer 110.

At step S212, the classical computer 110 receives the Bell measurement result transmitted from the control device 121 at step S210.

At step S214, the classical computer 110 computes the expectation value $\mathrm{Tr}\,(\sigma P_k^{(i)})$ of the Pauli products $P_k^{(i)}$ in the quantum state $\sigma$.

At step S216, based on the observation number of times of the $| \varphi_1^\pm >$ and $| \varphi_2^\pm >$ from out of the Bell measurement result received at step S212, the classical computer 110 computes, as a value related to a Pauli product expectation value, the product $(\mathrm{Tr}\,(\rho P_k^{(i)})) (\mathrm{Tr}\,(\sigma P_k^{(i)}))$ of the expectation value of the Pauli products $P_k^{(i)}$ in the quantum state $\rho$ and the expectation value of the Pauli products $P_k^{(i)}$ in the auxiliary state $\sigma$ according to a known method.

Next, at step S218, the classical computer 110 computes the respective expectation values $\mathrm{Tr}\,(\rho P_k^{(i)})$ of plural Pauli products $P_k^{(i)}$ by dividing the product $(\mathrm{Tr}\,(\rho P_k^{(i)})) (\mathrm{Tr}\,(\sigma P_k^{(i)}))$ of the expectation value of the Pauli product $P_k^{(i)}$ in the quantum state $\rho$ and the expectation value of the Pauli product $P_k^{(i)}$ in the auxiliary state $\sigma$ as computed at step S216, by the expectation value $\mathrm{Tr}\,(\sigma P_k^{(i)})$ of the Pauli product $P_k^{(i)}$ in the quantum state $\rho$.

Then, at step S220, the classical computer 110 computes the respective expectation values $< O_i >$ of plural operators $O_i$ contained in the set $\{O_i\}$ of a computation target operators obtained at step S202. Specifically, the classical computer 110 computes the respective expectation values $< O_i >$ of plural operators $O_i$ based on combinations of arbitrary Pauli products from out of the respective expectation values $\mathrm{Tr}\,(\rho P_k^{(i)})$ of the plural Pauli products obtained at step S218.

At step S222, the classical computer 110 transmits computation results of the respective expectation values $< O_i >$ of plural operators $O_i$ obtained at step S220 to the user terminal 130.

At step S224, the user terminal 130 receives results transmitted from the classical computer 110.

As described above, the classical computer from out of the hybrid system of the second exemplary embodiment computes the values $(\mathrm{Tr}\,(\rho P_k^{(i)})) (\mathrm{Tr}\,(\sigma P_k^{(i)}))$ related to the respective expectation values of plural Pauli products $P_k^{(i)}$ based on the $| \varphi_1^\pm >$ and $| \varphi_2^\pm >$ from out of the Bell measurement result. The classical computer computes the expectation values $\mathrm{Tr}\,(\sigma P_k^{(i)})$ of the Pauli products $P_k^{(i)}$ in the quantum state $\sigma$. Next, the classical computer computes the respective expectation values $\mathrm{Tr}\,(\rho P_k^{(i)})$ of the plural Pauli products $P_k^{(i)}$ by dividing the values $(\mathrm{Tr}\,(\rho P_k^{(i)})) (\mathrm{Tr}\,(\sigma P_k^{(i)}))$ related to the expectation values by the expectation value $\mathrm{Tr}\,(\sigma P_k^{(i)})$. The classical computer computes each of the expectation value of the plural operators $O_i$ based on the plural predetermined coefficients $c_k^{(i)}$ and based on the respective expectation values $\mathrm{Tr}\,(\rho P_k^{(i)})$ of the plural Pauli products $P_k^{(i)}$. This thereby enables expectation values of operators to be obtained efficiently. Moreover, the expectation values of operators can be obtained efficiently without acquiring the sign of the expectation values.

Note that the technology disclosed herein is not limited to the exemplary embodiments described above, and various modifications and applications are possible within a range not departing from the spirit of the invention.

For example, in the exemplary embodiment described above, information may be exchanged in any manner between the classical computer 110 and the quantum computer 120. For example, the exchange of quantum circuit parameters, the exchange of measurement results, and the like between the classical computer 110 and the quantum computer 120 may be performed by successive exchanges performed each time a specific computation is completed, or may be performed by exchange after all computations have been completed.

Moreover, in the exemplary embodiments described above, explanation has been given regarding an example of a case in which object-of-computation information is transmitted from the user terminal 130 to the classical computer 110, and the classical computer 110 executes computations according to the object-of-computation information. However, there is no limitation thereto. The user terminal 130 may transmit the object-of-computation information over a computer network such as an IP network to the classical computer 110 or to a storage medium or storage device accessible to the classical computer 110. Alternatively, the object-of-computation information may be stored on a storage medium or storage device and then passed to the administrator of the classical computer 110 for the administrator to input the object-of-computation information to the classical computer 110 using the storage medium or storage device.

In the exemplary embodiments described above, explanation has been given regarding an example of a case in which the quantum circuit is executed by irradiating an electromagnetic wave. However, there is no limitation thereto, and quantum circuit may be executed using a different method.

Although explanation has been given regarding an example of a case in which the quantum computer 120 executes the quantum computation in the exemplary embodiment described above, there is no limitation thereto. For example, quantum computations may be executed by a classical computer that imitates the behavior of a quantum computer.

Although the exemplary embodiments described above assume a case in which the classical computer 110 and the quantum computer 120 are administered by separate organizations, the classical computer 110 and the quantum computer 120 may be administered as one by the same organization. In such cases, there is no longer a need to transmit quantum computation information from the classical computer 110 to the quantum computer 120, or to transmit a measurement result from the quantum computer 120 to the classical computer 110. Moreover, in such cases the role of the classical computer 110 in the foregoing explanation may be thought of as being performed by the control device 121 of the quantum computer 120.

Note that in the foregoing exemplary embodiments described in the present specification, unless the word "solely" is used, as in "based solely on xx", "according solely to xx", or "solely in the case of xx", the present specification should be taken as considering also other additional information that may be anticipated. For example, wording such as "in the case of a, then b" should not be taken as meaning "b is always true in the case of a", unless clearly stated as such.

Note that although the foregoing exemplary embodiments employ expressions such as "optimize" and "optimized parameters", expressions relating to "optimization" should be taken as referring to approaching an optimal state. Accordingly, when attempting to obtain parameters so as to minimize a given function, the parameters obtained from optimizing the function are to be understood to not only be the parameters so as to achieve a global solution so as to minimize the function but also to include cases of a local solution thereto.

Moreover, even if there is an aspect in which an operation different to the operations described in the present specification is performed in a method, program, terminal, device, server, or system (hereafter "method or the like"), each of the embodiments of the technology disclosed herein concern operations the same as one of the operations described in the present specification, and the presence of an operation different to the one of the operations described in the present specification does not cause the method or the like to fall outside the scope of the embodiments of the technology disclosed herein.

Although explanation has been given in the present specification regarding exemplary embodiments in which a program is pre-installed, such a program may be provided stored on a computer-readable recording medium.

The processing executed by the CPU reading software (a program) in the exemplary embodiments described above may be executed by various processor types other than a CPU. Such processors include programmable logic devices (PLD) that allow circuit configurations to be modified post-manufacture, such as a field-programmable gate array (FPGA), and dedicated electric circuits, these being processors including a circuit configuration custom-designed to execute specific processing, such as an application specific integrated circuit (ASIC). The processing may be executed by any one of these various processor types, or may be executed by a combination of two or more of the same type or different types of processor (such as plural FPGAs, or a combination of a CPU and an FPGA). The hardware structure of these various types of processors is more specifically an electric circuit combining circuit elements such as semiconductor elements.

Moreover, although in the exemplary embodiments described above explanation has been given regarding a mode in which a program is stored (installed) in advance in storage, there is no limitation thereto. A program may be provided in a format stored on a non-transitory storage medium such as compact disk read only memory (CD-ROM), digital versatile disk read only memory (DVD-ROM), or universal serial bus (USB) memory. Alternatively, a program may be configured in a format downloadable from an external device over a network.

The respective processing of the present exemplary embodiments may be performed by a configuration of a computer, server, or the like including a generic computation processing device and storage device, with the respective processing being executed by a program. Such a program may be stored in the storage device, provided recorded on a recording medium such as a magnetic disk, an optical disk, or semiconductor memory, or provided over a network. Obviously any other configuration elements are also not limited to implementation by a single computer or server, and they may be distributed between plural computers connected together over a network and implemented thereon.

Moreover, the configuration elements of the hybrid system of the present exemplary embodiment are not limited to implementation by a single computer or server, and they may be distributed between plural computers connected together over a network and implemented thereon.

For example, the processing executed by the classical computer in the respective exemplary embodiments described above may be configured as processing distributed between and performed by plural classical computers connected over a network. Alternatively, for example, the processing executed by the quantum computer in the respective exemplary embodiments described above may be configured by processing distributed between plural quantum computers connected over a network. In such cases the hybrid system is configured by at least one or more classical computer and by at least one or more quantum computer.

For example, in cases in which the hybrid system is configured by plural classical computers and by plural quantum computers, one or more classical computer from out of the plural classical computers transmits the quantum circuit for preparing quantum states to the quantum computers. Next, one or more quantum computer from out of the plural quantum computers, with respect to a first qubit group containing n individual qubits and a second qubit group containing n individual qubits different to the qubits in the first qubit group, sets n individual pairs of a qubit in the first qubit group and a qubit in the second qubit group, uses the n individual pairs and the quantum circuit to execute Bell measurement on a tensor product of quantum states so as to acquire a result of the Bell measurement, and transmits the Bell measurement result to the classical computer. Then, one or more classical computer from out of the plural classical computers computes respective expectation values of plural Pauli products in a quantum state based on the Bell measurement results, and computes respective expectation values of plural operators based on a n arbitrary combinations of Pauli products from out of the plural Pauli products.

All publications, patent applications and technical standards mentioned in the present specification are incorporated by reference in the present specification to the same extent as if each individual publication, patent application, or technical standard was specifically and individually indicated to be incorporated by reference.

Supplements

The following supplements relate to embodiments of the present disclosure.

Supplement 1

A quantum information processing method for execution by a classical computer in a hybrid system including the classical computer and a quantum computer, the quantum information processing method including:

the classical computer transmitting a quantum circuit for preparing a quantum state to the quantum computer;
the quantum computer,

with respect to a first qubit group containing n individual qubits and a second qubit group containing n individual qubits different to the qubits in the first qubit group, setting n individual pairs of a qubit in the first qubit group and a qubit in the second qubit group,
using the n individual pairs and the quantum circuit to execute Bell measurement on a tensor product of quantum states so as to acquire a result of the Bell measurement, and
transmitting the Bell measurement result to the classical computer; and the classical computer
computing respective expectation values of plural Pauli products in a quantum state based on the Bell measurement results, and
computing respective expectation values of plural operators based on a n arbitrary combinations of Pauli products from out of the plural Pauli products.

Supplement 2

The quantum information processing method of Supplement 1, wherein:

each of plural operators $O_i$ (wherein i is an index to identify an operator) is computable by following Equation (A) based on coefficients $c_k^{(i)}$ and Pauli products $P_k^{(i)}$ (wherein k is an index to identify a Pauli product);

$$O_i = \sum_k c_k^{(i)} P_k^{(i)}$$

Equation (A)

the Bell measurement result for a tensor product of the quantum state $\rho$ is expressed by the following Equation (B1);

and

$$|\Phi_1^{\pm}\rangle = \frac{1}{\sqrt{2}}\left(|0\rangle_\rho \otimes |0\rangle_\rho \pm |1\rangle_\rho \otimes |1\rangle_\rho\right)$$

$$|\Phi_2^{\pm}\rangle = \frac{1}{\sqrt{2}}\left(|0\rangle_\rho \otimes |1\rangle_\rho \pm |1\rangle_\rho \otimes |0\rangle_\rho\right)$$

Equation (B1)

the classical computer

computes squares $(\mathrm{Tr}(\rho P_k^{(i)}))^2$ of respective expectation values of plural Pauli products $P_k^{(i)}$ in a quantum state $\rho$ based on $|\varphi_1^{\pm}\rangle$ and $|\varphi_2^{\pm}\rangle$ from out of the Bell measurement result,

computes absolute values $|\mathrm{Tr}(\rho P_k^{(i)})|$ of respective expectation values of plural Pauli products $P_k^{(i)}$ by computing square roots of the squares $(\mathrm{Tr}(\rho P_k^{(i)}))^2$,

computes respective expectation values $\mathrm{Tr}(\rho P_k^{(i)})$ of the plural Pauli products $P_k^{(i)}$ based on a sign of the expectation values predetermined for each of the plural Pauli products $P_k^{(i)}$ and based on the absolute values $|\mathrm{Tr}(\rho P_k^{(i)})|$ of the respective expectation values of the plural Pauli products $P_k^{(i)}$ and

computes respective expectation values of plural operators $O_i$ according to above Equation (A) based on plural predetermined coefficients $c_k^{(i)}$ and on the expectation values $\mathrm{Tr}(\rho P_k^{(i)})$ of the plural Pauli products $P_k^{(i)}$.

Supplement 3

The quantum information processing method of Supplement 2, wherein:

the quantum computer acquires the expectation value signs by approximate computation of an expectation value $\mathrm{Tr}(\rho P_k^{(i)})$ for each of the plural Pauli products $P_k^{(i)}$; and

the classical computer computes the respective expectation values $\mathrm{Tr}(\rho P_k^{(i)})$ of the plural Pauli products $P_k^{(i)}$ based on the expectation value signs obtained by the quantum computer and on the absolute values $|\mathrm{Tr}(\rho P_k^{(i)})|$ of the respective expectation values of the plural Pauli products $P_k^{(i)}$

Supplement 4

The quantum information processing method of Supplement 2, wherein the classical computer:

computes an expectation value $\mathrm{Tr}(\rho' P_k^{(i)})$ related to a state $\rho'$ approximating to the quantum state $\rho$; and

computes an expectation value $\mathrm{Tr}(\rho' P_k^{(i)})$ of each of the plural Pauli products $P_k^{(i)}$ based on a sign of the computed expectation value $\mathrm{Tr}(\rho' P_k^{(i)})$ and on the absolute values $|\mathrm{Tr}(\rho P_k^{(i)})|$ of the respective expectation values of the plural Pauli products $P_k^{(i)}$.

Supplement 5

The quantum information processing method of Supplement 2, wherein:

the operator is a Hamiltonian operator $H$;

a variational quantum eigensolver (VQE) is employed when computing expectation values of the Hamiltonian operator $H$;

the quantum state $\rho$ is a parameter $\theta$ appended quantum state $\rho(0)$; and

the classical computer, in repeated computation of the VQE when searching for a parameter $\theta^*$ so as to minimize $\mathrm{Tr}(\rho(\theta)H)$ that is an expectation value of the Hamiltonian operator $H$, computes respective expectation values $\mathrm{Tr}(\rho P_k^{(i)})$ for the plural Pauli products $P_k^{(i)}$ by reusing a sign of the expectation value obtained at a previous step as a sign of the expectation value for a next step onwards in a specific period.

Supplement 6

The quantum information processing method of Supplement 1, wherein:

each of plural operators $O_i$ (wherein i is an index to identify an operator) is computable by following Equation (A) based on coefficients $c_k^{(i)}$ and Pauli products $P_k^{(i)}$ (wherein k is an index to identify a Pauli product);

$$O_i = \sum_k c_k^{(i)} P_k^{(i)}$$

Equation (A)

the Bell measurement result for a tensor product of the quantum state ρ and the quantum state σ is expressed by the following Equation (B2);

$$|\Phi_1^{\pm}\rangle = \tfrac{1}{\sqrt{2}}(|0\rangle_\rho \otimes |0\rangle_\sigma \pm |1\rangle_\rho \otimes |1\rangle_\sigma)$$

$$|\Phi_2^{\pm}\rangle = \tfrac{1}{\sqrt{2}}(|0\rangle_\rho \otimes |1\rangle_\sigma \pm |1\rangle_\rho \otimes |0\rangle_\sigma)$$

Equation (B2)

the classical computer

computes values $(\mathrm{Tr}(\rho P_k^{(i)}))(\mathrm{Tr}(\sigma P_k^{(i)}))$ related to respective expectation values of plural Pauli products $P_k^{(i)}$ based on $|\varphi_1^{\pm}>$ and $|\varphi_2^{\pm}>$ from out of the Bell measurement result,
computes an expectation value $(\mathrm{Tr}(\sigma P_k^{(i)})$ of a Pauli product $P_k^{(i)}$ in a quantum state σ,
computes respective expectation values $\mathrm{Tr}(\rho P_k^{(i)})$ of the plural Pauli products $P_k^{(i)}$ by dividing the values $(\mathrm{Tr}(\rho P_k^{(i)}))(\mathrm{Tr}(\sigma P_k^{(i)}))$ related to the expectation values by the expectation value $(\mathrm{Tr}(\sigma P_k^{(i)})$, and
computes respective expectation values of plural operators $O_i$ according to above Equation (A) based on plural predetermined coefficients $c_k^{(i)}$ and on the expectation values $\mathrm{Tr}(\rho P_k^{(i)})$ of plural Pauli products $P_k^{(i)}$.

Supplement 7

The quantum information processing method of Supplement 6, wherein:

the quantum state σ is a superimposed state of quantum states of qubit numbers k1, k2, ···, km;

$$k1 + k2 + \cdots + km = n;$$

and
n is a total number of qubits for computing the quantum state σ.

Supplement 8

The quantum information processing method of Supplement 6, wherein the classical computer:

predetermines the quantum state σ by executing optimization computation so as to minimize an objective function expressing variation in computation results of the expectation values $(\mathrm{Tr}(\rho P_k^{(i)})$; and
transmits information of the quantum state σ to the quantum computer.

Supplement 9

A quantum information processing program for execution by a classical computer in a hybrid system including the classical computer and a quantum computer, the quantum information processing program causing the classical computer to execute processing including:

the classical computer transmitting a quantum circuit for preparing a quantum state to the quantum computer;
the quantum computer,

with respect to a first qubit group containing n individual qubits and a second qubit group containing n individual qubits different to the qubits in the first qubit group, setting n individual pairs of a qubit in the first qubit group and a qubit in the second qubit group,
using the n individual pairs to execute Bell measurement on a tensor product of quantum states so as to acquire a result of the Bell measurement, and
transmitting the Bell measurement result to the classical computer; and the classical computer
computing respective expectation values of plural Pauli products in a quantum state based on the Bell measurement results, and
computing respective expectation values of plural operators based on a n arbitrary combinations of Pauli products from out of the plural Pauli products.

Supplement 10

A classical computer in a hybrid system including the classical computer and a quantum computer, wherein:

the classical computer transmits a quantum circuit for preparing a quantum state to the quantum computer;
the quantum computer,

with respect to a first qubit group containing n individual qubits and a second qubit group containing n individual qubits different to the qubits in the first qubit group, sets n individual pairs of a qubit in the first qubit group and a qubit in the second qubit group,
uses the n individual pairs to execute Bell measurement on a tensor product of quantum states so as to acquire a result of the Bell measurement, and
transmits the Bell measurement result to the classical computer; and the classical computer
computes respective expectation values of plural Pauli products in a quantum state based on the Bell measurement results, and
computes respective expectation values of plural operators based on a n arbitrary combinations of Pauli products from out of the plural Pauli products.

Supplement 11

A hybrid system including a classical computer and a quantum computer, wherein in the hybrid system:

the classical computer transmits a quantum circuit for preparing a quantum state to the quantum computer;
the quantum computer,

with respect to a first qubit group containing n individual qubits and a second qubit group containing n individual qubits different to the qubits in the first qubit group, sets n individual pairs of a qubit in the first qubit group and a qubit in the second qubit group,
uses the n individual pairs to execute Bell measurement on a tensor product of quantum states so as to acquire a result of the Bell measurement, and
transmits the Bell measurement result to the classical computer; and the classical computer
computes respective expectation values of plural Pauli products in a quantum state based on the Bell measurement results, and
computes respective expectation values of plural operators based on an arbitrary combinations of Pauli products from out of the plural Pauli products.

Supplement 12

A hybrid system including plural classical computers and plural quantum computers, wherein in the hybrid system:

at least one classical computer from out of the plural classical computers transmits a quantum circuit for preparing a quantum state to the quantum computer;
at least one quantum computer from out of the plural quantum computers,

with respect to a first qubit group containing n individual qubits and a second qubit group containing n individual qubits different to the qubits in the first qubit group, sets n individual pairs of a qubit in the first qubit group and a qubit in the second qubit group,
uses the n individual pairs to execute Bell measurement on a tensor product of quantum states so as to acquire a result of the Bell measurement, and
transmits the Bell measurement result to the classical computer; and at least one classical computer from out of the plural classical computers
computes respective expectation values of plural Pauli products in a quantum state based on the Bell measurement results, and
computes respective expectation values of plural operators based on an arbitrary combinations of Pauli products from out of the plural Pauli products.

**Claims**

1. A quantum information processing method for execution by a classical computer in a hybrid system including the classical computer and a quantum computer, the quantum information processing method comprising:

the classical computer transmitting a quantum circuit for preparing a quantum state to the quantum computer;
the quantum computer,

with respect to a first qubit group containing n individual qubits and a second qubit group containing n individual qubits different to the qubits in the first qubit group, setting n individual pairs of a qubit in the first qubit group and a qubit in the second qubit group,
using the n individual pairs and the quantum circuit to execute Bell measurement on a tensor product of quantum states so as to acquire a result of the Bell measurement, and
transmitting the Bell measurement result to the classical computer; and

the classical computer

computing respective expectation values of a plurality of Pauli products in a quantum state based on the Bell measurement results, and
computing respective expectation values of a plurality of operators based on an arbitrary combinations of Pauli products from out of the plurality of Pauli products.

2. The quantum information processing method of claim 1, wherein:

each of a plurality of operators $O_i$ (wherein i is an index to identify an operator) is computable by following Equation (A) based on coefficients $c_k^{(i)}$ and Pauli products $P_k^{(i)}$ (wherein k is an index to identify a Pauli product);

$$O_i = \sum_k c_k^{(i)} P_k^{(i)}$$

Equation (A)

the Bell measurement result for a tensor product of the quantum state $\rho$ is expressed by the following Equation (B1); and

$$|\Phi_1^{\pm}\rangle = \frac{1}{\sqrt{2}}\left(|0\rangle_{\rho} \otimes |0\rangle_{\rho} \pm |1\rangle_{\rho} \otimes |1\rangle_{\rho}\right)$$

$$|\Phi_2^{\pm}\rangle = \frac{1}{\sqrt{2}}\left(|0\rangle_{\rho} \otimes |1\rangle_{\rho} \pm |1\rangle_{\rho} \otimes |0\rangle_{\rho}\right)$$

Equation (B1)

the classical computer

computes squares $(Tr\,(\rho P_k^{(i)}))^2$ of respective expectation values of a plurality of Pauli products $P_k^{(i)}$ in a quantum state $\rho$ based on $|\varphi_1^{\pm}>$ and $|\varphi_2^{\pm}>$ from out of the Bell measurement result,

computes absolute values $|Tr\,(\rho P_k^{(i)})|$ of respective expectation values of a plurality of Pauli products $P_k^{(i)}$ by computing square roots of the squares $(Tr\,(\rho P_k^{(i)}))_2$,

computes respective expectation values $Tr\,(\rho P_k^{(i)})$ of the plurality of Pauli products $P_k^{(i)}$ based on a sign of the expectation values predetermined for each of the plurality of Pauli products $P_k^{(i)}$ and based on the absolute values $|Tr\,(\rho P_k^{(i)})|$ of the respective expectation values of the plurality of Pauli products $P_k^{(i)}$, and

computes respective expectation values of a plurality of operators $O_i$ according to above Equation (A) based on a predetermined plurality of coefficients $c_k^{(i)}$ and on the expectation values $Tr\,(\rho P_k^{(i)})$ of the plurality of Pauli products $P_k^{(i)}$.

3. The quantum information processing method of claim 2, wherein:

the quantum computer acquires the expectation value signs by approximate computation of an expectation value $Tr\,(\rho P_k^{(i)})$ for each of the plurality of Pauli products $P_k^{(i)}$. and

the classical computer computes the respective expectation values $Tr\,(\rho P_k^{(i)})$ of the plurality of Pauli products $P_k^{(i)}$ based on the expectation value signs obtained by the quantum computer and on the absolute values $|Tr\,(\rho P_k^{(i)})|$ of the respective expectation values of the plurality of Pauli products $P_k^{(i)}$.

4. The quantum information processing method of claim 2, wherein the classical computer:

computes an expectation value $Tr\,(\rho' P_k^{(i)})$ related to a state p' approximating to the quantum state p; and

computes an expectation value $Tr\,(\rho P_k^{(i)})$ of each of the plurality of Pauli products $P_k^{(i)}$ based on a sign of the computed expectation value $Tr\,(\rho' P_k^{(i)})$ and on the absolute values $|Tr\,(\rho P_k^{(i)})|$ of the respective expectation values of the plurality of Pauli products $P_k^{(i)}$.

5. The quantum information processing method of claim 2, wherein:

the operator is a Hamiltonian operator H;

a variational quantum eigensolver (VQE) is employed when computing expectation values of the Hamiltonian operator H;

the quantum state $\rho$ is a parameter $\theta$ appended quantum state $\rho\,(0)$; and

the classical computer, in repeated computation of the VQE when searching for a parameter $\theta^*$ so as to minimize $Tr\,(\rho(\theta)H)$ that is an expectation value of the Hamiltonian operator H, computes respective expectation values $Tr\,(\rho P_k^{(i)})$ for the plurality of Pauli products $P_k^{(i)}$ by reusing a sign of the expectation value obtained at a previous step as a sign of the expectation value for a next step onwards in a specific period.

6. The quantum information processing method of claim 1, wherein:

each of a plurality of operators $O_i$ (wherein i is an index to identify an operator) is computable by following Equation (A) based on coefficients $c_k^{(i)}$ and Pauli products $P_k^{(i)}$ (wherein k is an index to identify a Pauli product);

$$O_i = \sum_k c_k^{(i)} P_k^{(i)}$$

Equation (A)

the Bell measurement result for a tensor product of the quantum state $\rho$ and the quantum state $\sigma$ is expressed by the following Equation (B2);

$$|\Phi_1^{\pm}\rangle = \frac{1}{\sqrt{2}}\left(|0\rangle_\rho \otimes |0\rangle_\sigma \pm |1\rangle_\rho \otimes |1\rangle_\sigma\right)$$

$$|\Phi_2^{\pm}\rangle = \frac{1}{\sqrt{2}}\left(|0\rangle_\rho \otimes |1\rangle_\sigma \pm |1\rangle_\rho \otimes |0\rangle_\sigma\right)$$

Equation (B2)

the classical computer

computes values (Tr $(\rho P_k^{(i)})$) (Tr $(\sigma P_k^{(i)})$) related to respective expectation values of a plurality of Pauli products $P_k^{(i)}$ based on $|\varphi_1^{\pm}>$ and $|\varphi_2^{\pm}>$ from out of the Bell measurement result,
computes an expectation value (Tr $(\sigma P_k^{(i)})$ of a Pauli product $P_k^{(i)}$ in a quantum state $\sigma$,
computes respective expectation values Tr $(\rho P_k^{(i)})$ of the plurality of Pauli products $P_k^{(i)}$ by dividing the values (Tr $(\rho P_k^{(i)})$) (Tr $(\sigma P_k^{(i)})$) related to the expectation values by the expectation value (Tr $(\sigma P_k^{(i)})$, and
computes respective expectation values of a plurality of operators $O_i$ according to above Equation (A) based on a predetermined plurality of coefficients $c_k^{(i)}$ and on the expectation values Tr $(\rho P_k^{(i)})$ of a plurality of Pauli products $P_k^{(i)}$.

7. The quantum information processing method of claim 6, wherein:

the quantum state $\sigma$ is a superimposed state of quantum states of qubit numbers k1, k2, ···, km;

$$k1 + k2 + \cdots + km = n;$$

and
n is a total number of qubits for computing the quantum state $\sigma$.

8. The quantum information processing method of claim 6, wherein the classical computer:

predetermines the quantum state $\sigma$ by executing optimization computation so as to minimize an objective function expressing variation in computation results of the expectation values (Tr $(\rho P_k^{(i)})$; and
transmits information of the quantum state $\sigma$ to the quantum computer.

9. A quantum information processing program for execution by a classical computer in a hybrid system including the classical computer and a quantum computer, the quantum information processing program causing the classical computer to execute processing comprising:

the classical computer transmitting a quantum circuit for preparing a quantum state to the quantum computer;
the quantum computer,

with respect to a first qubit group containing n individual qubits and a second qubit group containing n individual qubits different to the qubits in the first qubit group, setting n individual pairs of a qubit in the first qubit group and a qubit in the second qubit group,
using the n individual pairs to execute Bell measurement on a tensor product of quantum states so as to acquire a result of the Bell measurement, and

transmitting the Bell measurement result to the classical computer; and the classical computer

computing respective expectation values of a plurality of Pauli products in a quantum state based on the Bell measurement results, and

computing respective expectation values of a plurality of operators based on an arbitrary combinations of Pauli products from out of the plurality of Pauli products.

10. A classical computer in a hybrid system including the classical computer and a quantum computer, wherein:

the classical computer transmits a quantum circuit for preparing a quantum state to the quantum computer;
the quantum computer,

with respect to a first qubit group containing n individual qubits and a second qubit group containing n individual qubits different to the qubits in the first qubit group, sets n individual pairs of a qubit in the first qubit group and a qubit in the second qubit group,
uses the n individual pairs to execute Bell measurement on a tensor product of quantum states so as to acquire a result of the Bell measurement, and
transmits the Bell measurement result to the classical computer; and

the classical computer

computes respective expectation values of a plurality of Pauli products in a quantum state based on the Bell measurement results, and
computes respective expectation values of a plurality of operators based on an arbitrary combinations of Pauli products from out of the plurality of Pauli products.

11. A hybrid system including a classical computer and a quantum computer, wherein:

the classical computer transmits a quantum circuit for preparing a quantum state to the quantum computer;
the quantum computer,

with respect to a first qubit group containing n individual qubits and a second qubit group containing n individual qubits different to the qubits in the first qubit group, sets n individual pairs of a qubit in the first qubit group and a qubit in the second qubit group,
uses the n individual pairs to execute Bell measurement on a tensor product of quantum states so as to acquire a result of the Bell measurement, and
transmits the Bell measurement result to the classical computer; and

the classical computer

computes respective expectation values of a plurality of Pauli products in a quantum state based on the Bell measurement results, and
computes respective expectation values of a plurality of operators based on an arbitrary combinations of Pauli products from out of the plurality of Pauli products.

12. A hybrid system comprising a plurality of classical computers and a plurality of quantum computers, wherein in the hybrid system:

at least one classical computer from out of the plurality of classical computers transmits a quantum circuit for preparing a quantum state to the quantum computer;
at least one quantum computer from out of the plurality of quantum computers,

with respect to a first qubit group containing n individual qubits and a second qubit group containing n individual qubits different to the qubits in the first qubit group, sets n individual pairs of a qubit in the first qubit group and a qubit in the second qubit group,
uses the n individual pairs to execute Bell measurement on a tensor product of quantum states so as to acquire a result of the Bell measurement, and
transmits the Bell measurement result to the classical computer; and

at least one classical computer from out of the plurality of classical computers

computes respective expectation values of a plurality of Pauli products in a quantum state based on the Bell measurement results, and
computes respective expectation values of a plurality of operators based on an arbitrary combinations of Pauli products from out of the plurality of Pauli products.

FIG.1

FIG.2

FIG.3

## FIG.4

```
┌──────────────┐          ┌──────────────┐          ┌──────────────┐
│    USER      │─ 130     │  CLASSICAL   │─ 110     │   QUANTUM    │─ 120
│  TERMINAL    │          │  COMPUTER    │          │  COMPUTER    │
└──────────────┘          └──────────────┘          └──────────────┘
```

S100
┌─────────────────────────────────────────┐
│ TRANSMIT OBJECT-OF-                       │
│ COMPUTATION INFORMATION AND               │
│ COMPUTATION METHOD INFORMATION            │
└─────────────────────────────────────────┘

S102
┌─────────────────────────────────────────────┐
│ RECEIVE OBJECT-OF-COMPUTATION INFORMATION     │
│ AND COMPUTATION METHOD INFORMATION            │
└─────────────────────────────────────────────┘

S104
┌─────────────────────────────────────────────┐
│ TRANSMIT STATE PREPARATION METHOD,            │
│ INITIAL STATE, AND MEASUREMENT SHOT NUMBER    │
└─────────────────────────────────────────────┘

S106 ── │ RECEIVE VARIOUS INFORMATION │

S108 ── │ PERFORM BELL MEASUREMENT │

S110 ── │ TRANSMIT MEASUREMENT RESULT │

│ ACQUIRE MEASUREMENT RESULT │ ── S112

│ ACQUIRE SIGN │ ── S114

│ COMPUTE SQUARE OF PAULI PRODUCT │ ── S116

│ COMPUTE EXPECTATION VALUE OF PAULI PRODUCT │ ── S118

│ COMPUTE EXPECTATION VALUE OF OPERATOR │ ── S120

│ TRANSMIT RESULT │ ── S122

│ RECEIVE RESULT │ ── S124

```
┌──────┐          ┌──────┐          ┌──────┐
│ END  │          │ END  │          │ END  │
└──────┘          └──────┘          └──────┘
```

## FIG.5

```
USER          130        CLASSICAL       110      QUANTUM       120
TERMINAL                 COMPUTER                  COMPUTER
```

S200

TRANSMIT OBJECT-OF-
COMPUTATION INFORMATION AND
COMPUTATION METHOD INFORMATION

S202

RECEIVE OBJECT-OF-COMPUTATION INFORMATION
AND COMPUTATION METHOD INFORMATION

S204

TRANSMIT STATE PREPARATION METHOD,
INITIAL STATE, AND MEASUREMENT SHOT NUMBER

S206 — RECEIVE VARIOUS INFORMATION

S208 — PERFORM BELL MEASUREMENT

S210 — TRANSMIT MEASUREMENT RESULT

ACQUIRE MEASUREMENT RESULT — S212

COMPUTE EXPECTATION VALUE OF
PAULI PRODUCT IN QUANTUM STATE $\sigma$ — S214

COMPUTE VALUE RELATED TO
EXPECTATION VALUE OF PLURAL PAULI — S216

COMPUTE EXPECTATION
VALUE OF PAULI PRODUCT — S218

COMPUTE EXPECTATION VALUE OF
OPERATOR — S220

TRANSMIT RESULT — S222

RECEIVE RESULT — S224

END                      END                      END

## INTERNATIONAL SEARCH REPORT

| International application No. |
| --- |
| **PCT/JP2023/024466** |

| A. | CLASSIFICATION OF SUBJECT MATTER |
| --- | --- |

**G06N 10/00**(2022.01)i
FI:    G06N10/00

According to International Patent Classification (IPC) or to both national classification and IPC

| B. | FIELDS SEARCHED |
| --- | --- |

Minimum documentation searched (classification system followed by classification symbols)

G06N10/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-144400 A (INTERNATIONAL BUSINESS MACHINES CORPORATION) 10 September 2020 (2020-09-10)<br>entire text, all drawings | 1-12 |
| A | JP 2023-028166 A (QUNASYS INC.) 03 March 2023 (2023-03-03)<br>entire text, all drawings | 1-12 |
| A | US 2022/0171828 A1 (IBM) 02 June 2022 (2022-06-02)<br>entire text, all drawings | 1-12 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 September 2023** | **19 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

26

**INTERNATIONAL SEARCH REPORT**
Information on patent family members

International application No.

**PCT/JP2023/024466**

| Patent document cited in search report | | | Publication date (day/month/year) | Patent family member(s) | | | Publication date (day/month/year) |
|---|---|---|---|---|---|---|---|
| JP | 2020-144400 | A | 10 September 2020 | US | 2020/0242290 | A1 | |
| JP | 2023-028166 | A | 03 March 2023 | (Family: none) | | | |
| US | 2022/0171828 | A1 | 02 June 2022 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HSIN-YUAN HUANG ; RICHARD KUENG ; JOHN PRESKILL**. Information-theoretic bounds on quantum advantage in machine learning. *Phys. Rev. Lett.*, vol. 126, 190505, https://journals.aps.org/prl/abstract/10.1103/PhysRevLett.126.190505

- **ZHANG JIANG ; AMIR KALEV ; WOJCIECH MRUCZKIEWICZ ; HARTMUT NEVEN**. Optimal fermion-to-qubit mapping via ternary trees with applications to reduced quantum states learning. *Quantum*, 2020, vol. 4, 276, https://quantum-journal.org/papers/q-2020-06-04-276